# EUROPÄISCHE PATENTSCHRIFT

(11) **EP 2 048 091 B1**
(45) Veröffentlichungstag und Bekanntmachung des Hinweises auf die Patenterteilung: **01.02.2012**
(21) Anmeldenummer: 08105452.0
(22) Anmeldetag: 29.09.2008
(51) Int. Cl.: B65D 81/32

(54) **Kartusche für eine auspressbare Masse**
Cartridge for an extrudable mass
Cartouche pour une masse exprimable

(30) Priorität: 11.10.2007 DE 102007000850
(43) Veröffentlichungstag der Anmeldung: 15.04.2009
(73) Patentinhaber: HILTI Aktiengesellschaft, 9494 Schaan (LI)
(72) Erfinder: Ostermeier, Peter, 86911 Diessen (DE); Heiberger, Franz, 9507 Stettfurt (CH); Löschky, Ingo, 86916 Kaufering (DE); Strobel-Schmidt, Rainer, 86825 Bad Wörishofen (DE); Hefele, Christian, 87739 Breitenbrunn (DE)
(74) Vertreter: Wildi, Roland

(56) Entgegenhaltungen:
- EP-A2- 0 723 807
- WO-A1-2008/113196
- US-B1- 6 186 363

## Beschreibung

Die Erfindung betrifft eine Kartusche als Gebinde für eine mit einem Auspressgerät auspressbare Masse mit zumindest einem Aufnahmekörper, der einen Aufnahmeraum für die Masse aufweist, sowie mit einem Kopfteil, das eine Grundplatte mit einer Austrittsöffnung für die Masse und an einer Anlagefläche der Grundplatte zumindest einen Führungsabschnitt zur Kupplung mit einem Ende des Aufnahmekörpers aufweist.

Eine derartige Kartusche dient als Vorratsverpackung für die auspressbare Masse, wobei die Kartusche auswechselbar in einer Aufnahme eines Auspressgerätes, wie ein Dispenser, einlegbar ist. Die Masse, wie beispielsweise eine Mörtel- oder Dichtmasse, ist entweder direkt oder verpackt z. B. in einem Folienbeutel in dem Aufnahmeraum der Aufnahmekörper angeordnet. Mit dem Auspressgerät wird die in der Kartusche befindliche Masse an einem Applikationsort ausgebracht.

Aus der US 6,186,363 B1 ist eine Vorrichtung zum Befestigen eines Mischers an einer Zweikomponenten-Kartusche bekannt. Zum Zwecke der Codierung kann nach der US 6,186,363 B1 beispielsweise an der Vorderseite der Kartusche ein Vorsprung vorgesehen sein, der in einer entsprechenden Ausnehmung am Mischer in Eingriff kommt.

Weitere Dispenser, die Mittel zum Codieren aufweisen, sind aus der EP 0 723 802 A2 und der WO 2008/113196 A1 bekannt.

Aus der DE 91 00 054 U1 ist eine gattungsgemässe Kartusche bekannt, die zwei hohlzylindrische Aufnahmekörper mit jeweils einem Aufnahmeraum für getrennt gelagerte, in Folienbeuteln verpackte Komponenten einer auszupressenden Masse umfasst. Die Kartusche umfasst ein Kopfteil, das eine Grundplatte mit einer Austrittsöffnung für die Masse und an einer Anlagefläche der Grundplatte zwei hohlzylindrische Führungsabschnitte zum Zusammenführen mit einem Ende des Aufnahmekörpers aufweist. Im zusammengeführten Zustand der Kartusche ragen die Enden der Folienbeutel jeweils in die Führungsabschnitte hinein und die Aufnahmekörper sind über die Führungsabschnitte geschoben, so dass jeweils das betreffende Ende des Aufnahmekörpers an der Anlagefläche des Kopfteils anliegt.

Bei zwei- oder mehrkomponentigen Massen weist bezogen auf das Gesamtvolumen der Masse eine Komponente A üblicherweise einen grösseren Volumenanteil als die zumindest eine weitere Komponente B auf. Das Verhältnis der Komponente A zur Komponente B variiert beispielsweise im Bereich von 10:1 bis 1:1. Mit einem Typ von Auspressgeräten lassen sich Kartuschen beziehungsweise Gebinde mit unterschiedlichen Verhältnissen der A- zur B-Komponente auspressen. Die Aufnahmen der Auspressgeräte für die Kartuschen weisen jeweils eine fixe Länge auf, so dass für die Variation der Komponenten zueinander die Aufnahmeräume in ihrem lichten Querschnitt angepasst sind.

Um unterschiedliche Konfektionsgrössen von einkomponentigen Massen mit einem Typ von Auspressgerät auszupressen, weist der Aufnahmekörper jeweils eine der Länge der Aufnahme entsprechende Länge jedoch im lichten Querschnitt entsprechend dem aufzunehmenden Volumen eine entsprechende Grösse auf.

Nachteilig an der bekannten Lösung ist, dass Aufnahmekörper mit einem Querschnitt der z. B. grösser als der entsprechende Querschnitt des betreffenden Führungsabschnitts ist, trotzdem mit diesem zusammenführbar sind. Seitlich von dem Führungsabschnitt verbleibt jedoch bei derart zusammengeführten Teilen der Kartusche ein offener Spalt, durch den beim Auspressen der Masse diese beispielsweise in die Aufnahme des Auspressgerätes austreten kann. Neben der Verschmutzung der Aufnahme des Auspressgerätes ist zudem bei mehrkomponentigen Massen das korrekte Mischungsverhältnis der ausgebrachten Masse am Applikationsort nicht mehr gewährleistet.

Aufgabe der Erfindung ist es, eine Kartusche mit einem Kopfteil und zumindest einem Aufnahmekörper zu schaffen, die eindeutig zusammenführbar sind und eine hohe Anwendersicherheit gewährleisten.

Die Aufgabe ist durch die Merkmale des unabhängigen Anspruchs gelöst. Vorteilhafte Weiterbildungen sind in den Unteransprüchen dargelegt.

Gemäss der Erfindung ist an der Anlagefläche des Kopfteils wenigstens ein benachbart zu dem Führungsabschnitt angeordnetes Führungsmittel für den Aufnahmekörper vorgesehen, wobei der zumindest eine Aufnahmekörper eine Wandstärke aufweist, die sich von einer dem Aufnahmeraum zugewandten Seite des Aufnahmekörpers zu einer radial nach aussen gerichteten Seite des Aufnahmekörpers erstreckt, und wobei das wenigstens eine Führungsmittel eine von der Anlagefläche abragende Führungsnase ist, welche in einem Abstand zu dem Führungsabschnitt vorgesehen ist, der dem 0.9- bis 1.1-fachen der Wandstärke des Aufnahmekörpers entspricht.

Das wenigstens eine Führungsmittel verhindert das Zusammenführen eines Aufnahmekörpers mit dem einen Führungsabschnitt am Kopfteil, wenn der Aufnahmekörper nicht auf den betreffenden Führungsabschnitt abgestimmt ist. Wird ein für den Aufnahmekörper nicht geeignetes Kopfteil an diesem Aufnahmekörper angeordnet, ist die Gesamtlänge der falsch zusammengesetzten Kartusche so gross, dass der Anwender diese nicht korrekt in die Aufnahme eines Auspressgerätes einlegen kann. Der Anwender stellt somit sofort fest, dass bei dieser Kartusche etwas nicht in Ordnung ist und kann vor Beginn des Auspressvorgangs entsprechend reagieren. Ein Auspressen der auszupressenden Masse aus einer falsch zusammengesetzten Kartusche und die damit verbundenen Nachteile sind damit verhindert. Das wenigstens eine Führungsmittel bildet im Wesentlichen eine Kodierung an dem Kopfteil aus.

Vorzugsweise sind an dem Kopfteil mehrere Führungsabschnitte zum Führen der betreffenden Enden von mehreren Aufnahmekörpern für jeweils eine Komponente einer mehrkomponentigen Masse vorgesehen und zumindest benachbart zu einem der Führungsabschnitte ist das wenigstens eine Führungsmittel vorgesehen. Bei mehrkomponentigen Massen mit unterschiedlichen Verhältnissen der Komponenten zueinander weist üblicherweise nur eine der Komponenten, z. B. bei einem Mörtel die Härterkomponente, einen massgeblichen Unterschied im lichten Querschnitt des Aufnahmeraums des Aufnahmekörpers auf. Somit reicht in den meisten Anwendungen die Anordnung nur eines Führungsmittels neben einem der Führungsabschnitte aus, um eine Fehlanwendung zu verhindem. Bei einem Zusammenführen von zumindest zwei Aufnahmekörpem mit einem Kopfteil, das nicht für diese Aufnahmekörper ausgebildet ist, liegen die dem Kopfteil abgewandten Enden der Aufnahmekörper nicht in einer von einem der Enden aufgespannten Ebene, so dass der Anwender die Falschanwendung sofort visuell erkennen und die falsch zusammengeführte Kartusche nicht in die Aufnahme eines Auspressgerätes einlegen kann. In einer Variante dazu ist neben jedem Führungsabschnitt jeweils ein Führungsmittel zur entsprechenden Kodierung des Kopfteils vorgesehen.

Erfindungsgemäss ist das wenigstens eine Führungsmittel eine von der Anlagefläche abragende Führungsnase. Die Führungsnase ist ein Vorsprung der beispielsweise in eine an dem betreffenden Ende des Aufnahmekörpers ausgebildete Ausnehmung eindringt. Wird ein nicht auf diesen Führungsabschnitt abgestimmter Aufnahmekörper mit diesem zusammengeführt, steht das betreffende Ende des Aufnahmekörpers an dem freien Ende der Führungsnase an, womit die falsch zusammengeführte Kartusche gegenüber der entsprechenden Länge der Aufnahme des Auspressgerätes eine Überlänge aufweist.

Erfindungsgemäss weist der zumindest eine Aufnahmekörper eine Wandstärke auf, die sich von einer dem Aufnahmeraum zugewandten Seite des Aufnahmekörpers zu einer radial nach aussen gerichteten Seite des Aufnahmekörpers erstreckt, und die Führungsnase ist in einem Abstand zu dem Führungsabschnitt vorgesehen, der dem 0.9- bis 1.1-fachen der Wandstärke des Aufnahmekörpers entspricht. Beim Zusammenführen eines auf den Führungsabschnitt abgestimmten Aufnahmekörpers mit diesem Führungsabschnitt dringt das betreffende Ende des Aufnahmekörpers in den Freiraum zwischen einer Aussenkontur des Führungsabschnitts und einer dieser zugewandten Kontur der Führungsnase ein. Weist der Aufnahmekörper ein für das Zusammenführen mit dem betreffenden Führungsabschnitt ungeeignetes Mass auf, steht das betreffende Ende das Aufnahmekörpers an dem freien Ende der Führungsnase an und verhindert, wie bereits vorgenannt dargelegt, die ordnungsgemässe Verwendung dieser Kartusche in einem Auspressgerät. Zumindest das Kopfteil und üblicherweise auch der zumindest eine Aufnahmekörper sind vorteilhaft aus einem Kunststoff gefertigt. Infolge der Elastizität der zumeist verwendeten Kunststoffe kann der Abstand zwischen der Führungsnase und dem entsprechenden Führungsabschnitt auch weniger als die 1.0-fache Wandstärke des betreffenden Aufnahmekörpers betragen.

In einer weiteren, jedoch nicht zur Erfindung gehörenden Ausführungsform ist das wenigstens eine Führungsmittel eine in der Anlagefläche angeordnete Ausnehmung, in die eine am entsprechenden Ende des betreffenden Aufnahmekörpers abragende Einfühmase einführbar ist. Wird ein nicht auf den entsprechenden Führungsabschnitt abgestimmter Aufnahmekörper mit diesem zusammengeführt, so steht die Einfühmase am entsprechenden Ende des Aufnahmekörpers an der Anlagefläche des Kopfteils an, womit die falsch zusammengeführte Kartusche ebenfalls eine Überlänge mit den vorgenannten visuell und taktil wahmehmbaren Vorteilen aufweist. Ein korrektes Zusammenführen eines falsch ausgerichteten Aufnahmekörpers wird ebenfalls verhindert, da die Einfühmase am Aufnahmekörper nicht in die Ausnehmung in der Anlagefläche des Kopfteils eindringen kann. Wird der Aufnahmekörper verkehrt herum mit dem betreffenden Führungsabschnitt zusammengeführt, so dass die Einfühmase abgewandt von dem Kopfteil zu liegen kommt, verhindert diese über das dem Kopfteil abgewandte Ende herausragende Einfühmase ein korrektes Einführen beziehungsweise Einlegen der vollständigen Kartusche, aus einem Kopfteil und zumindest einem Aufnahmekörper, in die Aufnahme eines Auspressgerätes.

Vorzugsweise ist der zumindest eine Führungsabschnitt ein von der Anlagefläche des Kopfteils abragender umlaufender Wandabschnitt und das wenigstens eine Führungsmittel ist innenseitig von diesem Wandabschnitt angeordnet. Diese Anordnung verhindert auch bei Kopfteilen, bei denen der Aufnahmekörper beim Zusammenführen mit dem entsprechenden Führungsabschnitt von diesem aufgenommen wird, die unabsichtliche Verwendung einer falsch zusammengeführten Kartusche in einem Auspressgerät.

Die Erfindung wird nachstehend anhand von Ausführungsbeispielen näher erläutert. Es zeigen:
- Fig. 1: Ein Ausführungsbeispiel einer korrekt zusammengeführten Kartusche in Perspektive;
- Fig. 2: eine Seitenansicht einer falsch zusammengeführten Kartusche;
- Fig. 3: ein Kopfteil im Grundriss; und
- Fig. 4: ein weiteres, jedoch nicht zur Erfindung gehörendes Ausführungsbeispiel eines Kopfteils mit einem Endbereich eines Aufnahmekörpers in einer Explosionsdarstellung.

Grundsätzlich sind in den Figuren gleiche Teile mit den gleichen Bezugszeichen versehen.

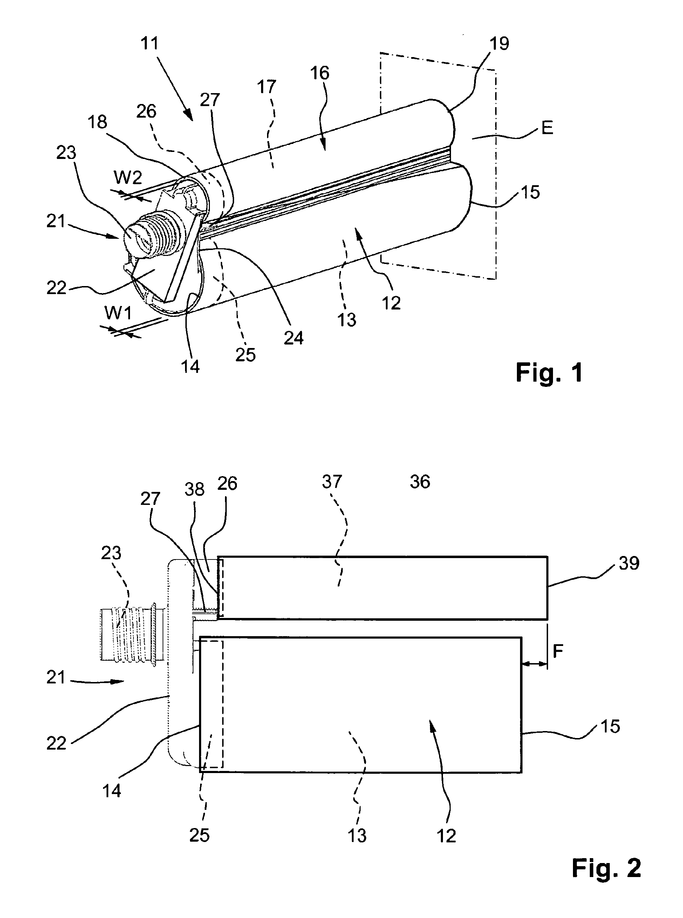

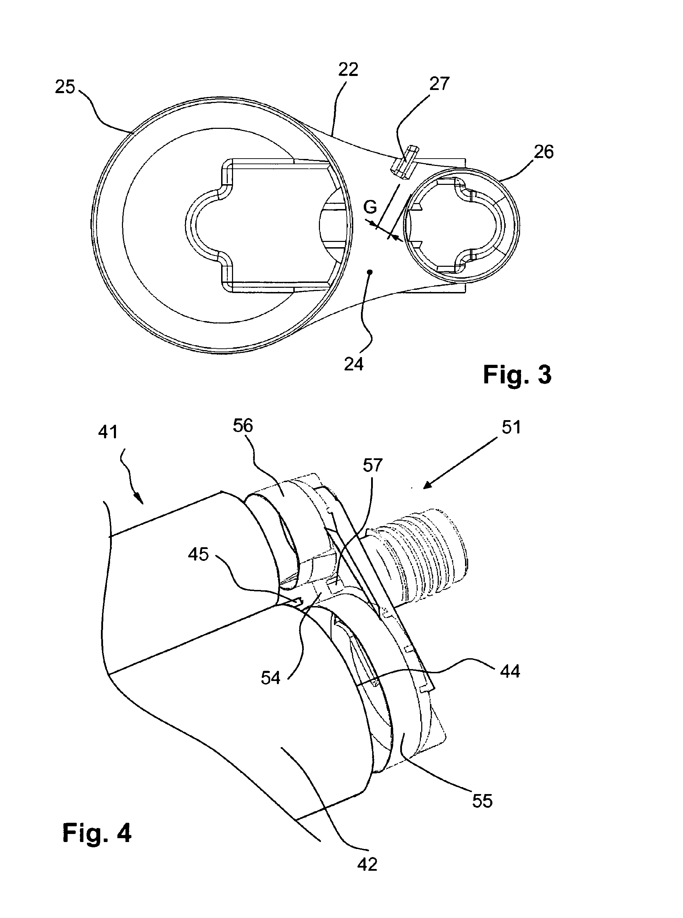

Die in den Figuren 1 und 3 dargestellte Kartusche 11 als Gebinde für eine mit einem hier nicht dargestellten Auspressgerät auspressbare Masse umfasst zwei Aufnahmekörper 12 und 16 sowie ein Kopfteil 21. Der hohlzylindrische Aufnahmekörper 12 weist einen Aufnahmeraum 13 für eine A-Komponente der Masse und eine Wandstärke W1 auf, die sich zwischen der dem Aufnahmeraum 13 zugewandten Seite des Aufnahmekörpers 12 und der radial nach aussen gerichteten Seite des Aufnahmekörpers 12 erstreckt. Der hohlrylindrische Aufnahmekörper 16 weist einen Aufnahmeraum 17 für eine B-Komponente der auspressbaren Masse und eine Wandstärke W2 auf, die sich zwischen der dem Aufnahmeraum 17 zugewandten Seite des Aufnahmekörpers 16 und der radial nach aussen gerichteten Seite des Aufnahmekörpers 16 erstreckt. Der Aufnahmekörper 16 weist einen im Querschnitt kleineren Aufnahmeraum 17 als der Aufnahmekörper 12 auf.

Das Kopfteil 21 weist eine Grundplatte 22 mit einer Austrittsöffnung 23 für die Masse und an einer Anlagefläche 24 der Grundplatte 22 zwei als umlaufende Wandabschnitte ausgebildete, von der Anlagefläche 24 abragende Führungsabschnitte 25 und 26 zum Zusammenführen mit einem Ende 14 bzw. 18 des Aufnahmekörpers 12 bzw. 16 auf. An der Anlagefläche 24 des Kopfteils 21 ist ein benachbart zu dem Führungsabschnitt angeordnetes Führungsmittel in Form einer von der Anlagefläche 24 abragenden Führungsnase 27 vorgesehen. Die Führungsnase 27 ist in einem Abstand G zu dem Führungsabschnitt 26 vorgesehen, der dem 1.0-fachen der Wandstärke W2 des Aufnahmekörpers 16 entspricht.

Im zusammengeführten Zustand der Kartusche 11 dringt das Ende 18 des Aufnahmekörpers 16 in den Freiraum zwischen der Führungsnase 27 und der Aussenkontur des Führungsabschnitts 26 ein, bis dieses an der Anlagefläche 24 anliegt. Da der Aufnahmekörper 16 und der Aufnahmekörper 12 die gleiche Längserstreckung aufweisen, liegen deren jeweils dem Kopfteil 21 abgewandten Enden 15 und 19 in einer von dem einen, dem Kopfteil 21 abgewandten Ende 15 des Aufnahmekörpers aufgespannten Ebene E. Diese vollständige Kartusche 11 aus Kopfteil 21 und Aufnahmekörpern 12 und 16 kann in die Aufnahme eines Auspressgerätes eingelegt und die darin befindliche Masse mittels des Auspressgerätes an einem gewünschten Applikationsort ausgebracht werden. Bei einem Kopfteil 21 mit mehreren Führungsabschnitten 25 und 26 kann, in einer hier nicht gezeigten Ausführungsform, benachbart zu jedem dieser Führungsabschnitte jeweils ein Führungsmittel an dem Kopfteil vorgesehen sein.

Wird nun, wie in Figur 2 dargestellt, versucht einen Aufnahmekörper 36 mit einem im Querschnitt grösseren Aufnahmeraum 37 als der Aufnahmeraum 17 des Aufnahmekörpers 16 mit dem Führungsabschnitt 26 am Kopfteil 21 zusammenzuführen, stösst das betreffende Ende 38 des Aufnahmekörpers 36 an dem freien Ende der Führungsnase 27 an. Da die Länge des Aufnahmekörpers 36 der Länge des Aufnahmekörpers 16 entspricht, ragt das dem Kopfteil 21 abgewandte Ende 39 des Aufnahmekörpers 36 mit der Überlänge F über das dem Kopfteil 21 abgewandte Ende 15 des Aufnahmekörpers 12 hinaus. Der Anwender erkennt sofort, dass ein falsches Kopfteil 21 beziehungsweise ein falscher Aufnahmekörper 36 verwendet wurde. Sollte der Anwender trotzdem versuchen, die falsch zusammengefügte Kartusche in die Aufnahme des hier nicht dargestellten Auspressgerätes einzulegen, verhindert der Überstand ein korrektes Einlegen beziehungsweise Einführen in die Aufnahme des Auspressgerätes. Eine Fehlanwendung mit einem nicht korrekten Mischverhältnis oder eine Verschmutzung der Aufnahme des Auspressgerätes durch eine falsch zusammengeführte Kartusche ist verhindert.

Sind die beiden Aufnahmekörper 12 und 36 einteilig ausgebildet, weist die falsch zusammengeführte Kartusche eine Gesamtlänge auf, die ein korrektes Einlegen in die Aufnahme des Auspressgerätes verhindert.

In Figur 4 ist eine alternative, jedoch nicht zur Erfindung gehörende Ausführungsform gezeigt, in der das Führungsmittel eine in der Anlagefläche 54 des Kopfteils 51 angeordnete Ausnehmung 57 ist. Die Ausnehmung 57 ist den umlaufenden Wandabschnitten angeordnet, welche die Führungsabschnitte 55 und 56 ausbilden und welche von der Anlagefläche 54 des Kopfteils 51 abragen. An einem entsprechenden Ende 44 des betreffenden Aufnahmekörpers 42, der mit dem Führungsabschnitt 55 zusammenführbar ist, ist eine abragende Einführnase 45 vorgesehen, die in die Ausnehmung 57 einführbar ist. Ist der Aufnahmekörper 42 nicht auf den Führungsabschnitt 55 abgestimmt oder wird der Aufnahmekörper 42 in einer falschen Ausrichtung mit dem Kopfteil 51 zusammengeführt, verhindert die an der Anlagefläche 54 oder an dem Führungsabschnitt 55 anstehende Einfühmase ein korrektes Zusammenführen der Teile zu einer in eine Aufnahme eines hier nicht dargestellten Auspressgerätes einlegbaren Kartusche 41. In einer alternativen, hier nicht dargestellten Ausführungsform ist die Ausnehmung 57 innenseitig neben einem der umlaufenden Wandabschnitte angeordnet, welche die Führungsabschnitte 55 und 56 ausbilden.

## Patentansprüche

1. Kartusche als Gebinde für eine mit einem Auspressgerät auspressbare Masse mit zumindest einem Aufnahmekörper (12, 16, 36; 42), der einen Aufnahmeraum (13, 17, 37) für die Masse aufweist, sowie
mit einem Kopfteil (21; 51), das eine Grundplatte (22) mit einer Austrittsöffnung (23) für die Masse und an einer Anlagefläche (24; 54) der Grundplatte (22) zumindest einen Führungsabschnitt (25, 26; 55) zum Zusammenführen mit einem Ende (14, 18, 38; 44) des zumindest einen Aufnahmekörpers (12, 16, 36; 42) aufweist, **dadurch gekennzeichnet, dass**
an der Anlagefläche (24; 54) des Kopfteils (21; 51) wenigstens ein benachbart zu dem Führungsabschnitt (26; 55) angeordnetes Führungsmittel für den zumindest einen Aufnahmekörper (16, 36; 42) vorgesehen ist, und dass
der zumindest eine Aufnahmekörper (12, 16, 36; 42) eine Wandstärke (W1, W2) aufweist, die sich von einer dem Aufnahmeraum (13, 17, 37) zugewandten Seite des Aufnahmekörpers (12, 16, 36; 42) zu einer radial nach aussen gerichteten Seite des Aufnahmekörpers (12, 16, 36; 42) erstreckt, und dass das wenigstens eine Führungsmittel eine von der Anlagefläche (24) abragende Führungsnase (27) ist, welche in einem Abstand (G) zu dem Führungsabschnitt (26) vorgesehen ist, der dem 0.9- bis 1.1-fachen der Wandstärke (W2) des Aufnahmekörpers (16) entspricht.

2. Kartusche nach Anspruch 1, **dadurch gekennzeichnet, dass** an dem Kopfteil (21; 51) mehrere Führungsabschnitte (25, 26; 55) zum Führen der betreffenden Enden (14, 28; 44) von mehreren Aufnahmekörpern (12, 16; 42) für jeweils eine Komponente einer mehrkomponentigen Masse vorgesehen sind, wobei zumindest benachbart zu einem der Führungsabschnitte (26; 55) das zumindest eine Führungsmittel vorgesehen ist.

3. Kartusche nach einem der Ansprüche 1 oder 2, **dadurch gekennzeichnet, dass** der zumindest eine Führungsabschnitt (25, 26; 55) ein von der Anlagefläche (24; 54) des Kopfteils (21; 51) abragender umlaufender Wandabschnitt ist und das wenigstens eine Führungsmittel innenseitig von diesem Wandabschnitt angeordnet ist.

## Claims

1. Cartridge as package for a compound that can be expelled with a dispenser tool, with at least one holder body (12, 16, 36; 42) that has a holding space (13, 17, 37) for the compound, and
with a head piece (21; 51) that comprises a baseplate (22) with an outlet opening (23) for the compound and at least one guide portion (25, 26; 55) on a bearing face (24; 54) of the baseplate (22) for assembly with one end (14, 18, 38; 44) of the at least one holder body (12, 16, 36; 42), **characterized in that**
at least one guide means for the at least one holder body (16, 36; 42) is provided on the bearing face (24; 54) of the head piece (21; 51) adjacently to the guide portion (26; 55), and **in that**
the at least one holder body (12, 16, 36; 42) has a wall thickness (W1, W2) extending from the side of the holder body (12, 16, 36; 42) tumed towards the holding space (13, 17, 37) to the radially outwards directed side of the holder body (12, 16, 36; 42), and **in that** the at least one guide means is a guide neb (27) jutting from the bearing face (24) that is provided at a distance (G) from the guide portion (26) equal to 0.9 to 1.1 times the wall thickness (W2) of the holder body (16).

2. Cartridge according to Claim 1, **characterized in that** a plurality of guide portions (25, 26; 55) for guiding the respective ends (14, 28; 44) of a plurality of holder bodies (12, 16; 42) each for one component of a multi-component compound are provided on the head piece (21; 51), the at least one guide means being provided at least adjacently to one of the guide portions (26; 55).

3. Cartridge according to either of Claims 1 and 2, **characterized in that** the at least one guide portion (25, 26; 55) is a peripheral wall portion jutting from the bearing face (24; 54) of the head piece (21; 51) and the at least one guide means is arranged on the inside of said wall portion.

## Revendications

1. Cartouche servant de conteneur pour une composition pouvant être éjectée avec un appareil d'éjection, comportant au moins un corps de réception (12, 16, 36 ; 42) qui inclut une chambre de réception (13, 17, 37) pour la composition, et
une partie de tête (21 ; 51) comportant une plaque de base (22) munie d'une ouverture de sortie (23) pour la composition et au moins une partie de guidage (25, 26 ; 55) agencée sur une surface de contact (24 ; 54) de la plaque de base (22) pour un assemblage avec une extrémité (14, 18, 38 ; 44) du au moins un corps de réception (12, 16, 36 ; 42), **caractérisée en ce que** sur la surface de contact (24 ; 54) de la partie de tête (21 ; 51) sont prévus au moins un élément de guidage agencé de manière adjacente à la partie de guidage (26 ; 55) pour le au moins un corps de réception (16, 36 ; 42), et **en ce que**
le au moins un corps de réception (12, 16, 36 ; 42) a une épaisseur de paroi (W1, W2) qui s'étend d'un côté du corps de réception (12, 16, 36 ; 42) dirigé vers la chambre de réception (13, 17, 37) jusqu'à un côté du corps de réception (12, 16, 36 ; 42) dirigé radialement vers l'extérieur, et **en ce que** le au moins un élément de guidage est un tenon de guidage (27) faisant saillie à partir de la surface de contact (24), lequel tenon de guidage est prévu à une distance (G) par rapport à la partie de guidage (26) qui correspond à 0,9 à 1,1 fois l'épaisseur de paroi (W2) du corps de réception (16).

2. Cartouche selon la revendication 1, **caractérisée en ce que** sur la partie de tête (21 ; 51) sont prévus plusieurs parties de guidage (25, 26 ; 55) pour guider les extrémités respectives (14, 28 ; 44) de plusieurs corps de réception (12, 16 ; 42) pour chaque composant d'une composition à plusieurs composants, dans laquelle le au moins un élément de guidage est prévu de manière au moins adjacente à l'une des parties de guidage (26 ; 55).

3. Cartouche selon l'une quelconque des revendications 1 ou 2, **caractérisée en ce que** la au moins une partie de guidage (25, 26 ; 55) est une partie de paroi circonférentielle faisant saillie à partir de la surface de contact (24 ; 54) de la partie de tête (21 ; 51) , et le au moins un élément de guidage est agencé du côté intérieur de cette partie de paroi.
